Europäisches Patentamt

(19) European Patent Office

Office européen des brevets

(11) Publication number: **0 002 913**
**B1**

(12) **EUROPEAN PATENT SPECIFICATION**

(45) Date of publication of patent specification: **02.06.82**

(21) Application number: **78300827.9**

(22) Date of filing: **15.12.78**

(51) Int. Cl.³: **B 65 H 5/00, B 65 H 5/06,
B 65 H 29/00,
B 65 H 29/60,
G 03 B 27/42, G 03 B 27/62**

(54) Recirculating sheet feeder and copying or duplicating machine having such feeder.

(30) Priority: **27.12.77 US 864346**

(43) Date of publication of application:
**11.07.79 Bulletin 79/14**

(45) Publication of the grant of the patent:
**02.06.82 Bulletin 82/22**

(84) Designated Contracting States:
**DE FR GB**

(56) References cited:
**DE - A - 2 360 433
DE - A - 2 713 916
DE - A - 2 723 434
DE - A - 2 723 458
DE - B - 1 966 637
US - A - 3 499 710**

(73) Proprietor: **International Business Machines
Corporation
Armonk, N.Y. 10504 (US)**

(72) Inventor: **Miller, Myrl J
258 Spruce
Boulder Colorado 80302 (US)**

(74) Representative: **Lancaster, James Donald
IBM United Kingdom Patent Operations Hursley
Park
Winchester Hants SO21 2JN (GB)**

Courier Press, Leamington Spa, England.

Recirculating sheet feeder and copying or duplicating machine having such feeder.

This invention relates to a recirculating sheet feeder for feeding pages of a document a plurality of times in predetermined sequence through a processing station, and is particularly, but not only concerned with copying or duplicating machines which can be arranged, for example, for automatically producing multiple copies of a set of original documents.

The recirculating sheet feeder has an input bin for such pages, transporting means for transporting the pages from the input bin to the processing station in a predetermined sequence, additional bin means, delivering means for feeding pages to the additional bin means from the processing station, extracting means for feeding pages from the additional bin means for delivery to the processing station in the same sequence as said predetermined sequence, and control means controlling operation of said extracting means and said delivering means to cause pages received in said additional bin means from said input bin via said processing station to circulate repeatedly from the additional bin means, to the processing station, and back to the additional bin means.

The invention also relates to a copying or duplicating machine having such a recirculating sheet feeder, the machine having means for detecting a copy jam therein or in a collator or other copy-handling apparatus associated therewith. In an effort to reduce extensive operator attention to copier or duplicator machine operation, various devices have been developed to automate multiple copy runs of original documents with minimal operator intervention. Further, attempts have been made to render the machine independent of external or additional collator apparatus by recirculating original documents within the machine itself so that multiple collated sets are produced.

For instance, one arrangement includes a cassette which is preloaded with a stack of documents to be copied and with a spacer bar resting on the top of the document stack so that the documents can be bottom fed from this cassette to a processing station and returned for top stacking in the cassette. Such apparatus is incapable of accepting more than one duplicating job at a time within the cassette, and further, removal of the spacer bar each time a complete set of documents has been copied, and replacement of the spacer bar, causes difficulties.

Another device with a recirculating document capability is disclosed in US Patent 3,499,710, and has two document receptacles in the form of stations or bins, placed on opposite sides of a copying station with the documents being bottom fed from one receptacle, across the processing station and top fed into the opposite receptacle. The device requires the reversal of these functions with appropriate gating for bottom feeding from the second receptacle and top stacking into the original receptacle. As with the cassette loaded recirculating structure mentioned previously, this shuttling apparatus can accept no more than a single copying stack at a time. The machine operation must be interrupted while the operator empties and reloads the input tray for each job to be run.

Two other specifications DE—A—2 723 434 and DE—A—2 723 458 disclose copiers with a recirculating document capability. Both are concerned with copying two-sided originals, which necessarily involves problems regarding the order in which page sides are copied, and the turning over of pages so that the opposite sides can be copied. Both make use, for these purposes, of an additional bin separate from the input bin, and pages are recirculated in the desired order and orientation through the exposure station of the copier by way of the additional bin. After completion of copying, the pages are again in the input bin, and are removed by the operator from it. Neither specification suggests, or discusses the specific problems of, simultaneously loading a stack of documents in the input bin, each document of which is to be copied a different plurality of times.

In a recirculating sheet feeder according to the invention, to enable a stack of documents to be loaded simultaneously at any time to said input bin, while still providing for each document to be fed pagewise through the processing station a different plurality of times, said additional bin means has document unloading means so that a document can be removed from further circulation in the recirculating sheet feeder at the additional bin means, said transporting means being operated to transport the pages of the next document from the input bin to the processing station, assuming fault-free operation, when the pages of a present document have passed through the processing station the appropriate plurality of times and have been removed at the additional bin means.

The feeder can be operated without interruption even though additional documents are added to the stack in the input tray. In addition, the feeder can be arranged so as not to require operator attention between successive documents.

None of the recirculating techniques discussed above provides copy or jam recovery which requires the return of the last page passed through the processing station for a repeat processing at that station. The present invention can be embodied in a form in which the additional bin means has withdrawing means selectively operable in response to a predetermined condition associated with the page most recently delivered by said delivering means to said additional bin means to withdraw that page therefrom for redelivering to the processing station, said page after such redelivering being returned to its former place in the additional bin means by said delivering means.

In the case of a copying or duplicating machine, having a recirculating sheet feeder, and means for detecting a copy jam in the machine or in a collator or other copy-handling apparatus associated therewith, this copy jam involving one or more copies of a page, can be a predetermined condition associated with that page.

Two ways of carrying out the invention are described in detail below with reference to drawings in which

FIGURE 1 is a diagrammatic side view of a recirculating sheet feeder according to the invention attached to a copier machine;

FIGURE 2 is an enlarged detail view of part of FIGURE 1;

FIGURE 3 is a diagrammatic side view of a second embodiment of a sheet feeder according to the invention;

FIGURE 4 is a schematic representation of an operating state of the FIGURE 3 embodiment;

FIGURE 5 is an enlarged perspective illustration of a separator mechanism used in the FIGURE 3 embodiment, and which can be used in the FIGURE 3 embodiment;

FIGURE 6 is a block diagram of electrical control elements associated with the embodiment of FIGURE 1;

FIGURES 7A—7D can be assembled as shown thereon to form a single flow chart illustrating many operational details of the embodiment of FIGURES 1 and 6;

FIGURES 8A and 8B can be assembled as shown thereon to form a single flow chart illustrating a copy jam recovery operation of the embodiment of FIGURES 1 and 6;

FIGURE 9 is an example of a typical header card which can be used in the embodiment of FIGURE 1; and

FIGURE 10 is a diagrammatic view of a card reader for reading the card of FIGURE 9.

This description commonly uses the term document to mean one or more pages, and the term job to relate to one or more pages, which, in the case where there is a plurality of pages, may comprise a plurality of documents.

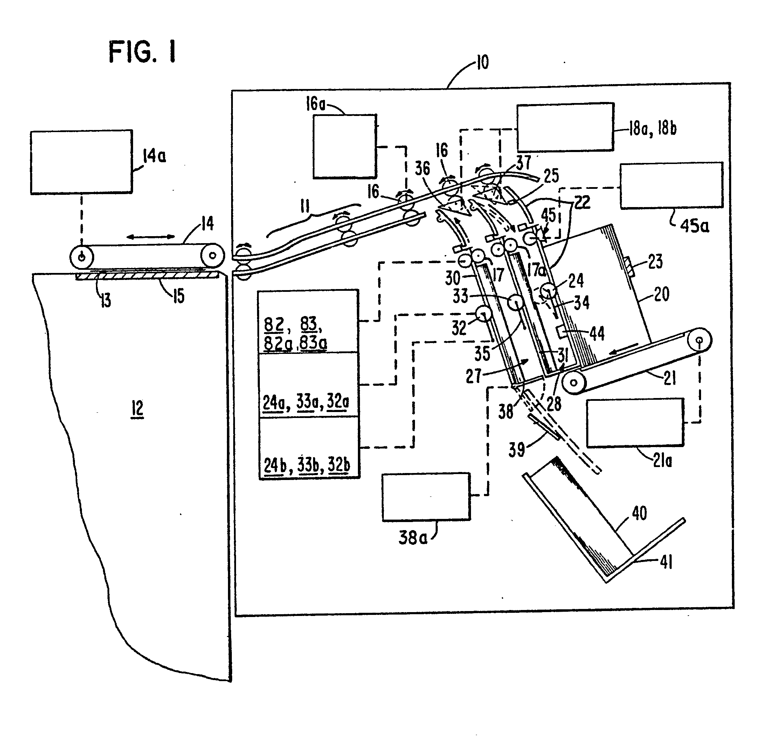

In the FIGURE 1 embodiment, a recirculating sheet feeder 10 in accordance with this invention, is shown for introducing and retrieving pages of documents relative to a conventional copier machine 12. Only feed belt 14 with its drive 14a and exposure window or glass 15 of the copier 12 are of interest here and accordingly, the remaining elements of copier 12 have been omitted.

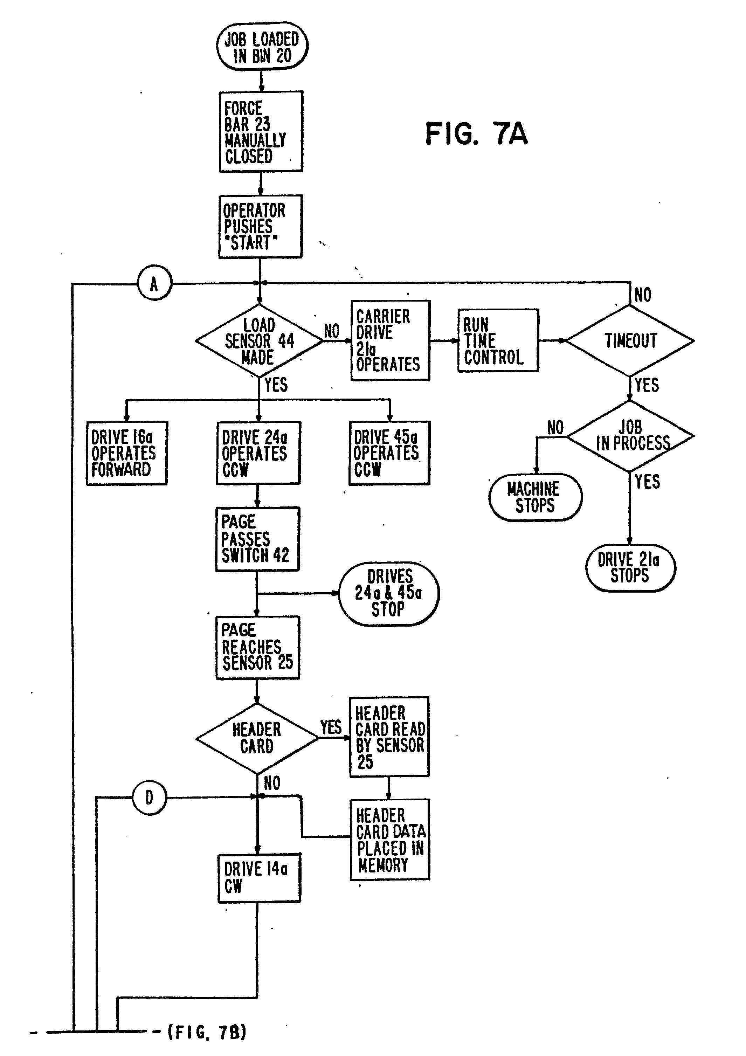

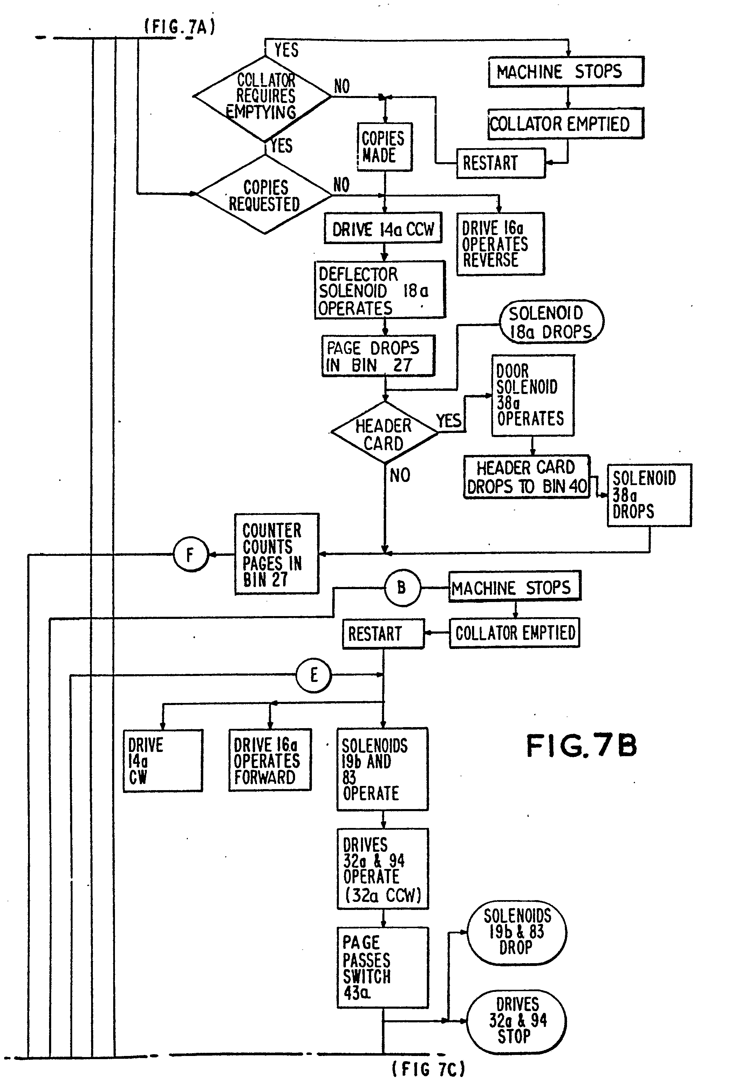

Feeder 10 includes an input job tray 20 capable of having multiple reproduction jobs simultaneously stacked therein as is generally illustrated in FIGURE 1. These jobs are separated by coded identification sheets, alternatively called header cards, which identify the subsequent job and define what is to be done with it in terms of number of copies, whether both sides of the copy sheet are to be used to carry copy images (duplexing), whether copy images are to be formed of smaller size than the originals (reduction) etc. The stack of jobs in tray 20 rests on a carrier 21 which brings the jobs into contact with part of a wall 22 and thus to a transporting means in the form of feed mechanism 24 which can be a friction feed roller or the like. In operation carrier belt drive 21a drives carrier 21 intermittently as will be made apparent (Fig. 7A). Documents are loaded against support wall 22 and feed roller 24 by a follower or force bar 23, and the presence of the documents is sensed by a load sense switch 44. As jobs are fed out of input tray 20, more jobs can be added to the rear of the stack in tray 20 by temporarily retracting bar 23.

A code reader device or sensor 25 in the path, commonly called the paper path, from the job tray 20 to glass 15 reads the indicia on each header card and programs the subsequent job.

Two separate additional bins comprising storage bins 27 and 28 can be used to receive pages fed from glass 15 after they have been copied. These bins have support walls 30 and 31 and extracting means in the form of feed mechanisms 32 and 33 which can remove pages from the bins and return them to the glass 15. Feed mechanisms 24 and 33 are pivotably mounted as by arms 34 and 35 and are operable such that they can feed pages from either side. For example feed mechanism 33 can either bottom feed pages from bin 28 or top feed pages from bin 27. When pivoted to give top feeding, the mechanisms 24, 33 serve as withdrawing means, and this feature is particularly advantageous for recovery from copy jams as will be described later herein. Feed mechanism 32 is also pivotably mounted to allow it to be removed from bin 27 should it be desired to use feed mechanism 33 to feed pages from bin 27 while feed roll 32 is being driven. Drives 24a, 32a, 33a, and solenoids 24b, 32b, 33b. are shown diagrammatically respectively for driving the rolls of, and for pivoting, the feed mechanisms 24, 32, 33.

Glass 15 receives a page shown by reference number 13 as it emerges from an aligner area 11 of the paper path, and feed belt 14 aligns and registers the page at its proper position on glass 15. Feed belt 14 can also operate in the reverse direction and return the page to the paper path upon logic command. The proper path has pairs of feed rolls 16 driven by drive 16a selectively for forward or reverse feeding. Deflectors 36 and 37 in the paper path can be operated by respective deflector solenoids 18a and 18b to direct a page to the proper bin 27 or 28. These deflectors form part of a delivering means for feeding pages from the glass 15 to the bins 27, 28.

Use and operation of the FIGURE 1 embodiment can be generally understood from an exemplary job. Assume a job which requires a large number of sets of a five page document. Initially, the original five pages are fed face down, serially, out of job tray 20 by a feeder mechanism 24 via a separator roll mechanism 45 driven by a drive 45a and are sent serially to the glass 15 where a quantity of copies is made equal to the capacity of a collator (not shown) associated with the copier 12. After each page is copied, it is removed from glass 15 and sent, according to this example, to bin 28 where it is top stacked in sequence. When the collator is cleared of the completed sets, the pages are bottom fed by mechanism 33 in the same sequence as that in which they were fed from tray 20 through a separator mechanism 17a having control solenoids 82a, 83a, to glass 15, copied in the same quantity and order, and sent to bin 27 for storage. If still more sets are required, the feeding is done by bottom feed mechanism 32 from bin 27 through a separator mechanism 17 having control solenoids 82, 83 and the pages after copying are returned to bin 28. This operation alternates between bins 27 and 28 with the pages in effect repeatedly circulating, until the required number of sets are complete. At any time, another job may be added to the rear of the job tray stack without disturbing this operation.

An advantageous feature of the present invention relates to the possibility of recovery from copy jams in machine 12 or in its collator. If the original page of a copy which has jammed in machine 12 is still on glass 15, no action by feeder assembly 10 would normally be required for copy jam recovery. However, it is frequently the case that the next original page is on glass 15 before the final copies of the previous page have cleared from machine 12. If a jam should occur with one of these copies, the feeder assembly 10 allows the machine to replace the previous page on the glass and to remake the lost copies.

This can be accomplished as illustrated in the following example with reference to FIGURE 1. Assume that page 3 of the five page document has beed fed from bin 28 and that page 2 has been copied and placed in bin 27, and a jam then occurs on a copy of page 2. To initiate jam recovery, page 3 is removed from glass 15 and fed by the feed belt 14 to the paper path where it is deflected and top fed into bin 28, i.e. the bin not containing the page 2 requiring recopying. In bin 28, the pages are in a bottom-to-top sequence of pages 4, 5 and 3. Page 2, namely the page of which a copy has jammed, and which is the most recently delivered page to bin 27, is then fed from bin 27 by feed mechanism 33 which is downwardly pivoted onto the top of page 2 in bin 27 for returning this page to glass 15 for the required copies. Page 2 is then returned to its previous place in bin 27. Page 3 is then fed by mechanism 24 which is pivoted into top engagement with page 3 for returning it to glass 15. After normal copy sequencing at glass 15, page 3 is deposited on the top of the stack in bin 27, and page 4 is fed from bin 28 by bottom feeding by mechanism 33, and is fed to glass 15. Thus, the machine is fully returned to its normal operation and recovered from the copy jam.

When the job is completed, all pages of the job are either already in, or are sent to, bin 27, and an actuable unloading means in the form of a hinged bottom door 38 is opened by operating a solenoid 38a. The pages are allowed to drop and are deflected by guide 39, or otherwise suitably carried, to a completed job stack 40 of original pages in an output tray 41. The completed job stack 40 can be removed by an operator. Of course the bottom of bin 28 can likewise be arranged to permit the same emptying procedure as for bin 27. Yet another alternative is to logically control which of the bins 27 or 28 first receive pages from input tray 20 via glass 15 so that the job stack of pages will always be in bin 27 after the last copies have been made.

As already mentioned input job tray 20 can be stacked with additional new jobs at random without interruption of the machine operation. Carrier 21 is operated positively to load these jobs against the feed mechanism 24. Each job commences with entry of data specifying what has to be done. This can be achieved as explained by heading each job stack of pages with a flexible coded identification sheet or header card which defines the subsequent job. Reader device 25 reads the indicia on the header card as it passes along paper path from tray 20. The dual storage bins 27 and 28 allow recirculation of the pages so as to permit successive copying and collating to give, in effect, unlimited collating, greater than the collating capacity of a collator associated with the copier. Three fed mechanisms 24, 32 and 33 perform the initial page feeding, and subsequent recirculating. Feed mechanisms 24 and 33 can feed from either of the bins 20, 28 or 27, 28 respectively to enable jam recovery recirculation after a jam condition is sensed as described above. Automatic unloading of the pages of a completed job through the trap door 38 to the output tray 41 allows an operator to remove each original page set as the copying job on it is completed, without demanding machine shutdown. Tray 41 can be arranged to move to ensure top feeding of completed jobs from deflector guide 39 onto the top of stack 40 if this should be desired.

Apart from code reader 25 and header cards, other techniques can be used for entering data defining copying jobs such as by operator or computer entry of the data and the like. For header card, operator or computer entry, it is desirable to include a memory or suitable data storage means capable of accepting this information. For operator or computer entry, the data storage means should be able to queue this information in conformity with the jobs in the input stack of tray 20.

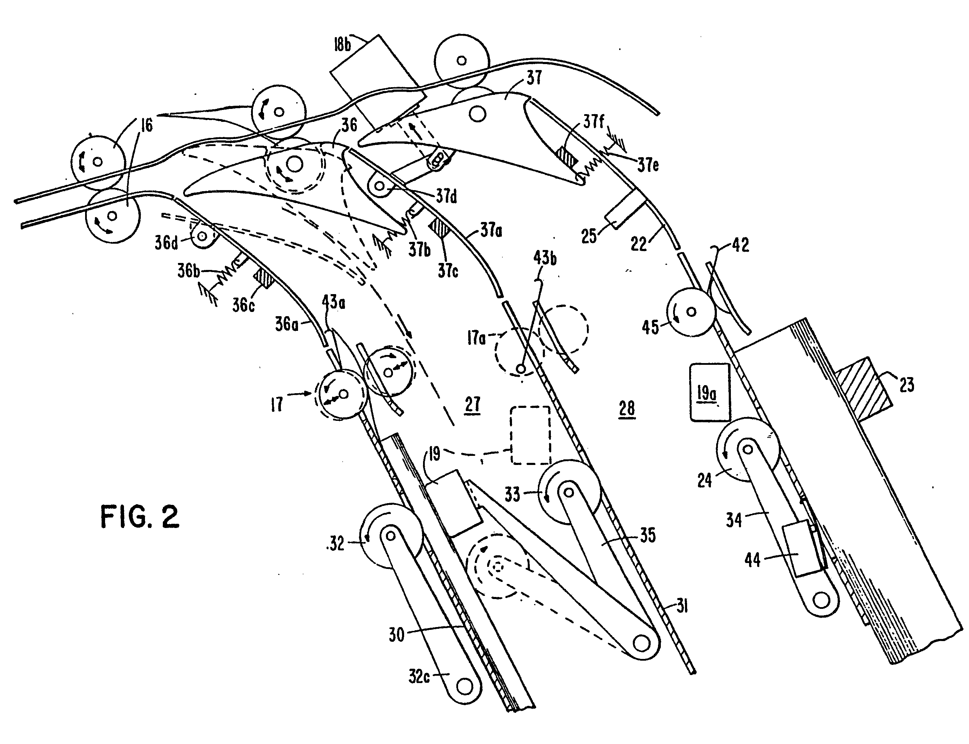

FIGURE 2 illustrates in greater detail the elements of the FIGURE 1 paper paths associated with the bins 20, 27 and 28. A load bar 19 is pivotably mounted and can be moved from the dash line position to the solid line position by energisation of a solenoid 19b (not shown in Fig. 2), to ensure pressure on the pages in bin 27 towards feed mechanism 32 when pages are to be extracted from bin 27. Bar 19 is pivoted out of the way to the dash line position when its solenoid 19b is de-energised when bin 27 is being loaded or feed mechanism 33 is top feeding pages from bin 27. Full pivoting of bar 19 may not be required for the top feeding operation since it is only necessary to ensure that bar 19 does not create a disruptive drag on the top page. Note that a similar load bar 19a with an operating solenoid 19c (not shown in Fig. 2) is included for bin 28 and feed mechanism 33.

Deflector solenoids 18a and 18b (only 18b being shown in Fig. 2) operates deflectors 36 and 37, respectively along with their associated guides 36a and 37a. For purposes of clarity, only the associated coupling structure of solenoid 18b to deflector 37 and guide 37a has been shown, but it will be understood that solenoid 18a is similarly coupled to deflector 36 and guide 36a. Note that guides 36a and 37a are normally biased by springs 36b and 37b against stops 36c and 37c to form part of the output feed paths for bins 27 and 28 when solenoids 18 are not actuated. Additionally, springs normally bias deflectors 36 and 37 into the positions shown in FIGURE 2 against respective stops, only spring 37e and stop 37f for deflector 37 being shown in FIGURE 2. Actuation of either solenoid 18a or 18b results in pivoting of deflector 36 or 37 along with guide 36a or 37a (i.e. around rotary mount 36d or 37d) into a position to cause pages to be loaded into bin 27 or 28 and to stack correctly on top of any other pages already in the bin. This is shown in dotted lines in FIGURE 2 for deflector 36 and guide 36A.

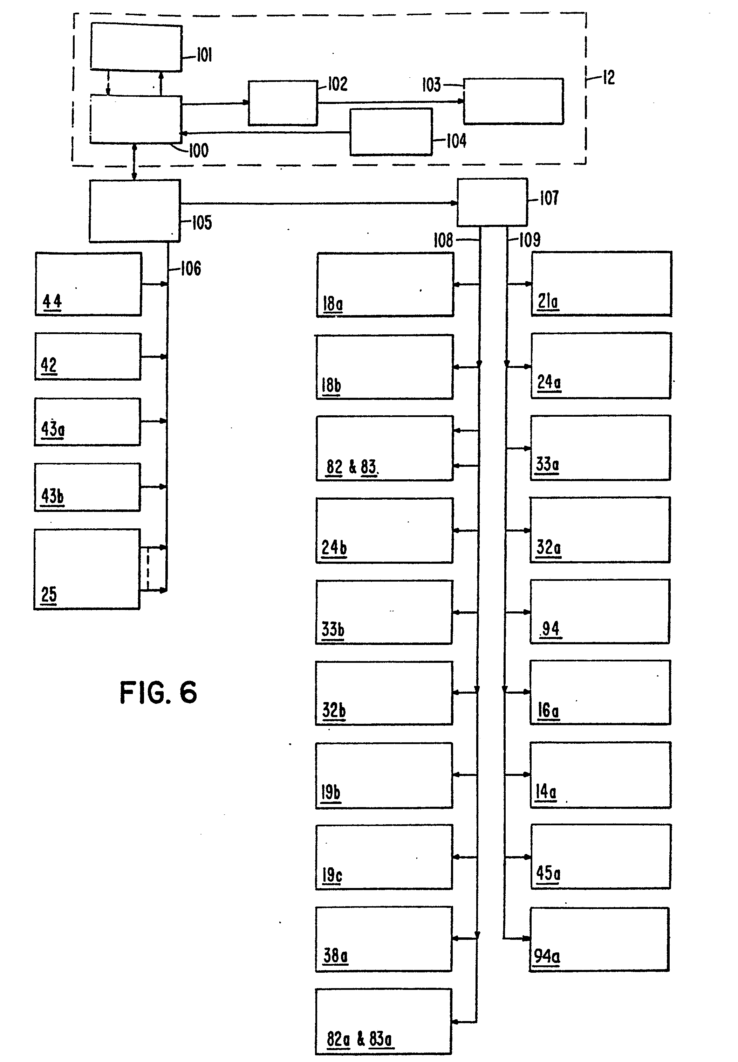

Switches 42, 43a and 43b are included in the paper output paths respectively of tray 20, bin 27 and bin 28, to provide appropriate input signals to a feeder controller, shown in FIGURE 6 at 105. Drive rolls 16 are positioned in the input/output paper path to the copies and are selectably driven in either direction to carry pages towards or away from copier 12, and bins 20, 27 and 28.

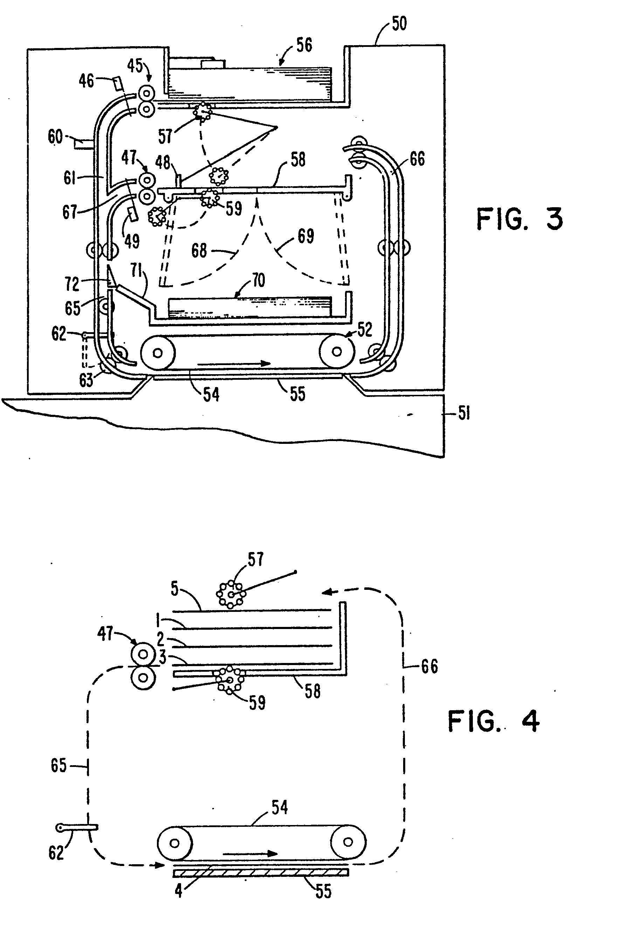

FIGURE 3 illustrates another embodiment of the invention including some elements performing functions similar to FIGURE 1 such as a load tray, an intermediate receiving tray, i.e. an additional bin, feed drives that pivot as needed, unloading from the intermediate tray, etc. In FIGURE 3, only one additional bin is needed in the automatic document feeder recirculator 50 which is adapted for attachment to a conventional copier 51. In this embodiment, copier 15 interfaces with a feeder 52 including belt 54 for introducing pages to copier glass 55. Feeder 50 includes an input tray 56 for receiving simultaneously a multiplicity of stacks of jobs, with feed wheel 57 being arranged to bottom feed the pages thereof face up from tray 56. A single additional recirculator bin 58 is included with its own bottom feed mechanism 59. As pages are bottom fed from input tray 56, they pass a sensor 60 which detects data on a header card for each job in a manner similar to sensor 25 of FIGURE 1.

In use, the operator loads one or more jobs face up into the input or load bin 56. Each job has a header card face up to the bottom of the job with this card having coded indications of the required functions that are to be performed for that job. The header card is bottom fed by feed wheel 57 through the separator 45 and past sensing switch 46 and sensor 60 where the coded job requirements are read. The header card proceeds to gate 62 of the load station 65 via paper path 61. When copier 51 is ready to copy, gate 62 retracts and the header card is fed between the belt 54 and the glass 55. The copy machine 51 then scans this header card to make the copy. The header card may in fact not be copied depending upon user desires. Alternatively, the header card can be promptly passed to an output bin 70 after reading at 60 and without copying if this should be desired. This can be done by manually or automatically activating deflector 72 which directs the header card onto guide 71 and thence into output bin 70.

During the copy cycle, assuming that a header card on glass 55 has just been copied, the first page of the job is fed from load bin 56 via the load station 65 and gate 62 onto the glass 55, while a scanner (not shown) of the copier 51 is repositioned, and while the header card is fed from glass 55 through paper path 66 towards bin 58. Pivotally mounted bar 48 is located in bin 58 to act as a stop for the incoming pages from path 66. Succeeding pages of the job are bottom fed from load bin 56 past sensing switch 46, copied and top fed into the bin 58. This continues until all the pages of the job in process have been removed from load bin 56 and transferred to bin 58.

If recirculation is required to provide additional copies, stop bar 48 is lifted and the pages are bottom fed by feed mechanism 59 in the same sequence as that in which they were fed from bin 56, from the bottom of the bin 58 to the load station 65 via separator 47, sensing switch 49 in paper path 67, then past gate 62 and onto glass 55, and are returned to the top of bin 58. Upon completion of the job, bin 58 is emptied by opening hinged floor elements 68 and 69 so as to drop the original page stack into the completed job bin 70 where it can be removed automatically or by an operator.

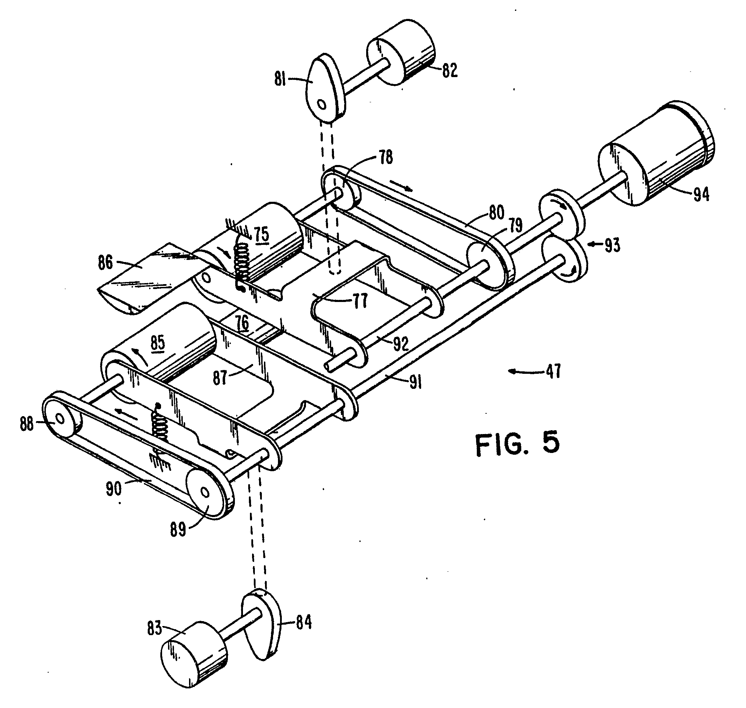

In the event of a copy jam in copier 51 after the original page for the jammed copy has been removed from glass 55, the recovery procedure is similar to that described previously for the FIGURE 1 embodiment, but there are differences. In the embodiment shown in FIGURES 3 and 4, the pages are fed up in bins 58. Consequently, a five page job has page five fed first followed by page four, and so forth. FIGURE 4 illustrates schematically the machine status if copier 51 jams while feeder assembly 50 is in a recirculation mode of operation such that page five copies are still in copier 51 at a point that original page five (see reference number 5) has returned to bin 58 and page four (reference number 4) is on glass 55. Feed wheel 57 is then pivoted down to the top of the bin 58 stack onto page five and separator system 47 switches from a bottom feed mode to a top feed mode, as will be described with reference to FIGURE 5. Page five of the set then is fed to glass 55, while page four is returned to the top of the bin 58 stack by operation of belt 54, which commences after the downward pivoting of feed wheel 57 to feed page 5. Page five is recopied and returned to the top of the bin 58 stack while page four is returned by feed wheel 58 to glass 55 via gate 62. The device is thus returned to its proper configuration so as to resume normal copy operation from that point.

FIGURE 5 shows the detail of separator system 47 located beside bin 58 of FIGURE 3, and it is to be understood that similar structure is employed for separator system 17 for bin 27 and separator system 17a for bin 28 in the embodiment of FIGURES 1 and 2. These separator systems allow pages to be separated from either the top or bottom of the stack in the associated bin. The operation of the dual mode separator system is such that when feeding in normal operation from the bottom of the stack, bottom feed separator roll 85 is forced with a predetermined force towards restraint pad 86 by rotation of cam 84 against pivoting bracket 87. Cam 84 rotation is provided by rotary solenoid 83. The drive for bottom feed separator roll 85 comes through drive belt 90 which runs round pulleys 88 and 89. Pulley 89 is driven by drive shaft 91, gear trains 93 and motor 94. During operation of bottom fed separator roll 85, top feed separator roll 75 is out of engagement with its restraint pad 76 and thus is inoperative. When top feeding is selected, cam 81 responds to rotary solenoid 82 by pushing against bracket 77, which urges top feed separator roll 75 towards pad 76 and, at the same time, roll 85 and pad 86 are spaced apart and inoperable, as a result of reverse rotation of cam 84. Belt 80 is driven round pulleys 78 and 79 via drive shaft 92 and motor 94 in an opposite direction from belt 90.

FIGURE 6 is a block diagram showing various electrical controllers, sensors, solenoids and drivers with appropriate interconnections for operation of the embodiment of FIGURES 1 and 2 and the separators 17 and 17a being in accordance with FIGURE 5. A copier controller 100 is typically a conventional micro-processor included in copier 12 and having operator controls 101 as known in the art. Controller 100 typically controls the various elements internal to copier 12 such as power driver 102 and motor and solenoids 103 while monitoring information from sensors 104, which can, amongst other things, provide signals indicating copy jams. Additionally, controller 100 issues commands to feeder controller 105 to cause feeder assembly 10 to operate in proper synchronisation with copier 12. In turn, controller 105 responds to information sensed at input cable 106 and issues appropriate control signals to power driver 107. Thus, power driver 107 introduces enabling power as appropriate to selected actuator devices connected to output cable 108 and also operates the selected devices coupled to output 109.

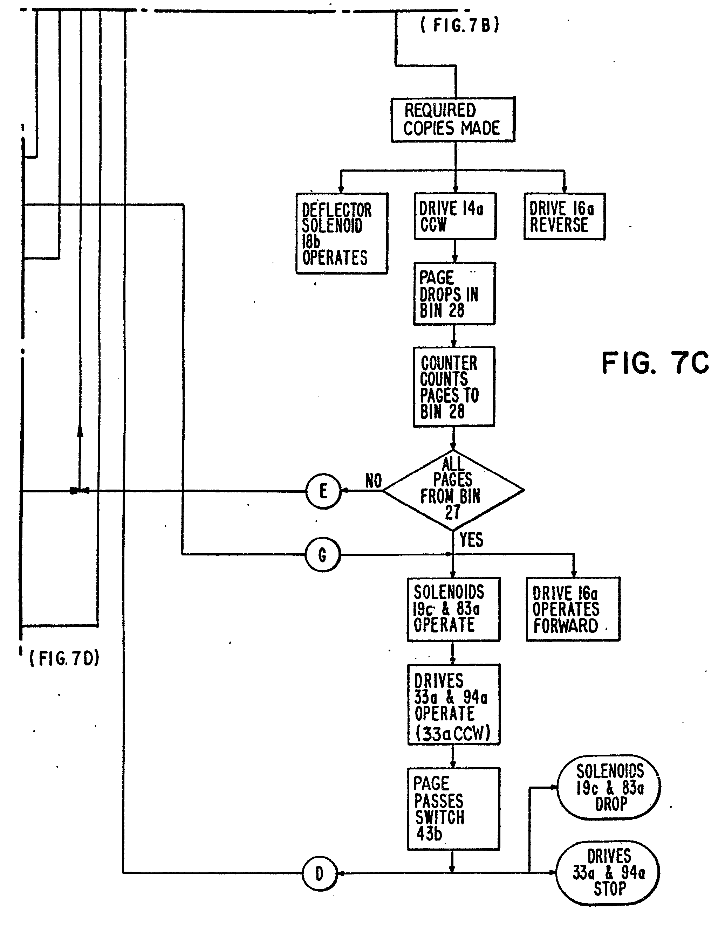

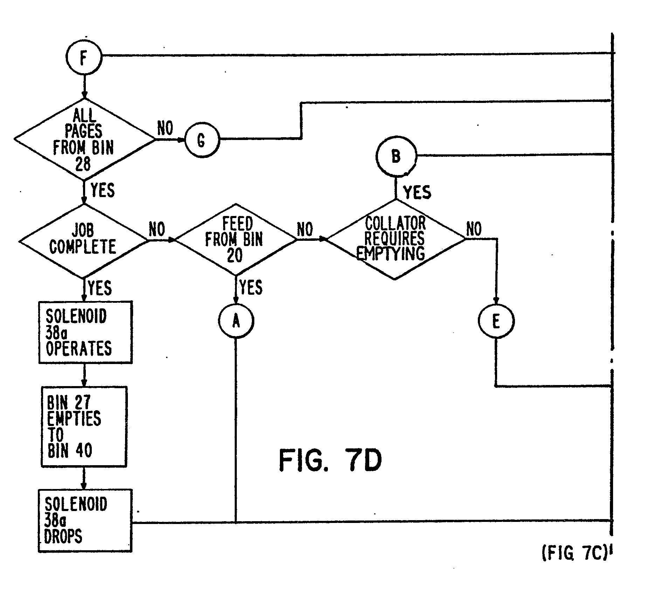

FIGURES 7A, 7B, 7C and 7D can be fitted together as shown on the Figures to form an illustrative flow chart relating to operation of the FIGURES 1, 2, 5 and 6 embodiment. The flow chart relates to the situation where each job has a header card, which is fed from bin 20, read by sensor 25, fed to glass 15, returned to bin 27, and released by bin door 38 into output tray 41, before the first page to be copied as part of the job is fed from bin 20. After pages are first copied, they are fed into bin 27, from which they are transferred to bin 28, bin 27, bin 28, bin 27, etc., for further copying, or for transfer, as may be required. The pages finally leaving bin 27 when the job has been completed. In the flow chart, the statement that solenoid 19b or 19c operates means that the associated load bar 19 or 19a is pivoted counter-clockwise i.e. CCW as seen In Fig. 2, from its upper to its lower position.

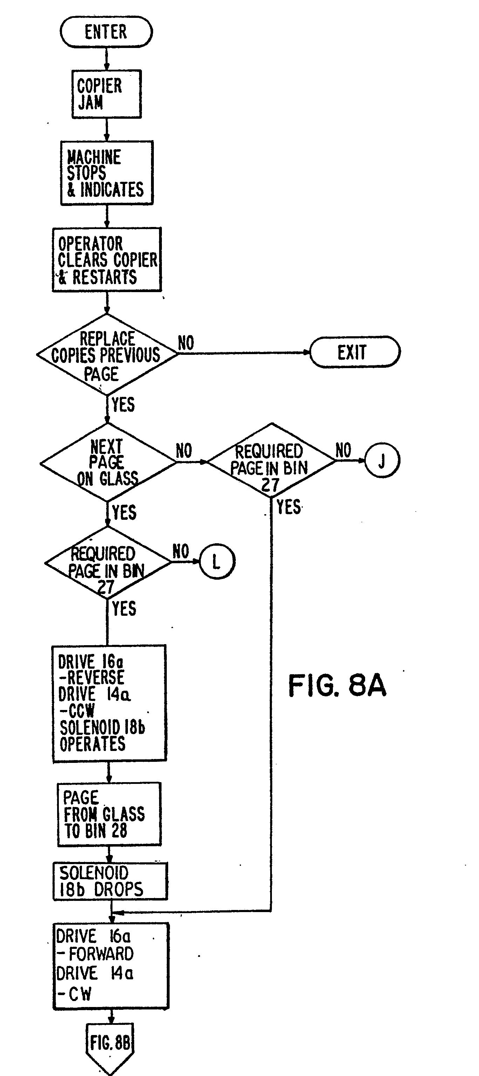

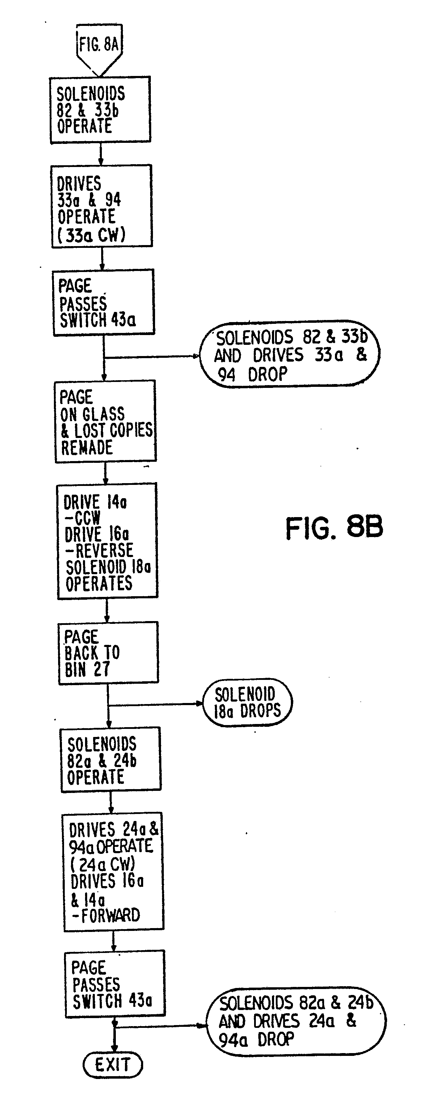

FIGURES 8A and 8B can be fitted together as shown on the Figures to form an illustrative flow chart relating to copier jam recovery of the FIGURES 1, 2, 5 and 6 embodiment. Copy jams are indicated by sensors 104 (Fig. 6). The flow chart concerns the situation where the pages to be re-copied i.e. the "required page" is in bin 27. If the "required page" is not in bin 27, it will be in bin 28, and outlets J and L are shown for leading to sub-flow-charts (not shown) to cover the appropriate steps. Thus, "J" represents a start point for a sequence (not shown) necessary to retrieve the required page from bin 28 followed by re-copying of that page and return of the required page to bin 28 before the normal copying sequence is resumed. Similarly, if the next page is on the glass while the required page is in bin 28 (i.e., not in bin 27), point "L" represents a start point for a sequence wherein the next page is placed in bin 27 after which the required page is retrieved by top feeding from bin 28. After re-copying, the required page is returned to bin 28, the next page retrieved by top feeding from bin 27 for return to the glass and the machine resumes normal copying operations.

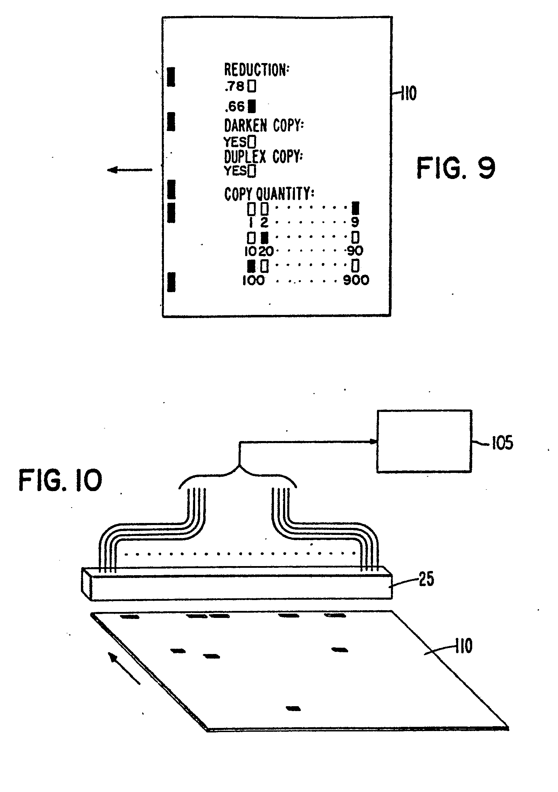

FIGURE 9 illustrates a design of a header card which, by operator or machine markings placed on the card in appropriate places, can identify and define a job. Such items as the quantity of copies to be made, reduction size, etc., can be specified, and the left-hand column of markings is for card identification and timing. As shown in FIGURE 10, sensor 25 reads these marks and sends the information to the controller 105. For example, in FIGURE 10, the sensor 25 is a stack of units composed of LED light source devices and an array of photo-transistors arranged to sense the presence and absence of light reflected from the header card as it moves past sensor 25. The light source devices and photo-transistors of sensor 25 can be typically be Texas Instruments model TIL 139 device.

Claims

1. Recirculating sheet feeder for feeding pages of a document a plurality of times in predetermined sequence through a processing station (15, 55), having an input bin (20, 56) for said pages, transporting means (24, 16, 14, 61) for transporting the pages from the input bin to the processing station in a predetermined sequence, additional bin means (27, 28, 58), delivering means (14, 16, 36, 37, 66) for feeding pages to the additional bin means from the processing station, extracting means (32, 33, 59) for feeding pages from the additional bin means for delivery to the processing station in the same sequence as said predetermined sequence, and control means (100, 105) controlling operation of said extracting means and said delivering means to cause pages received in said additional bin means from said input bin via said processing station to circulate repeatedly from the additional bin means, to the processing station, and back to the additional bin means, characterised in that to enable a stack of documents to be loaded simultaneously at any time in said input bin, while still providing for each document to be fed pagewise through the processing station a different plurality of times, said additional bin means has document unloading means (38, 68, 69) so that a document can be removed from further circulation in the recirculating sheet feeder at the additional bin means, said transporting means being operated to transport the pages of the next document from the input bin to the processing station, assuming fault-free operation, when the pages of a present document have passed through the processing station the appropriate plurality of times and have been removed at the additional bin means.

2. Recirculating sheet feeder as claimed in claim 1, characterised in that said additional bin means has withdrawing means selectively operable in response to a predetermined condition associated with the page most recently delivered by said delivering means to said additional bin means to withdraw that page therefrom for re-delivery to the processing station, said page after such re-delivery being returned to its former place in the additional bin means by said delivering means.

3. Recirculating sheet feeder as claimed in claim 2, having at least a first additional bin forming said additional bin means characterised in that said transporting means is selectively adjustable to serve as a withdrawing device of said withdrawing means for a said page most recently delivered to said first additional bin.

4. Recirculating sheet feeder as claimed in claim 3 characterised in that said additional bin means has a second additional bin, and said extracting means comprises first and second extracting devices associated respectively with said first and second additional bins, said first extracting device being selectively adjustable to serve as withdrawing device of said withdrawing means for a said page most recently delivered to said second additional bin.

5. Recirculating sheet feeder as claimed in claim 4 characterised in that said delivering means is operable, prior to said selective operation of said withdrawing means, if a subsequent page has reached the processing station following the page with which said predetermined condition is associated, to deliver said subsequent page then at the processing station to the one of the first and second additional bins not containing the page with which said predetermined condition is associated, from where said subsequent page is returned by said withdrawing means to the processing station following said page with which said predetermined condition is associated.

6. Recirculating sheet feeder as claimed in claim 3 characterised in that said delivering means is operable, after said selective operation of said withdrawing means has commenced, if a subsequent page has reached the processing station following the page with which said predetermined condition is associated to deliver said subsequent page then at the processing station to said additional bin, from where said subsequent page is returned by said withdrawing means to the processing station following said page with which said predetermined condition is associated.

7. Recirculating sheet feeder as claimed in any one of claims 3 to 6 characterised in that said transporting means is pivotable to allow said selective adjustability thereof.

8. Recirculating sheet feeder as claimed in claim 4 or 5, or as claimed in claim 7 when dependent on claim 4 or 5, characterised in that said first extracting device is pivotable to allow said selective adjustability thereof.

9. Recirculating sheet feeder as claimed in any preceding claim characterised in that a sensor is provided for reading job defining indicia present on a page as it is transported from the input bin by said transporting means, for controlling the recirculating sheet feeder.

10. Recirculating sheet feeder as claimed in any preceding claim characterised in that said document unloading means comprises one or more actuable doors controlled to unload the pages of a document from the additional bin means when those pages have been fed through the processing station said plurality of times, assuming fault-free operation, and before the first page of a next document in the input bin reaches the additional bin means.

11. Copying or duplicating machine having a recirculating sheet feeder as claimed in any one of claims 2 to 8, the copying machine having means for detecting a copy jam therein or in a collator or other copy-handling apparatus associated therewith, characterised in that such copy jam, involving one or more copies of a page, is a said predetermined condition associated with that page.

## Patentansprüche

1. Blattzuführungsvorrichtung für die mehrmalige Zuführung von Seiten eines Dokuments in vorherbestimmter Sequenz zu einer Bearbeitungsstation (15, 55), mit einem Eingabefach (20, 56) für besagte Seiten, Transportmitteln (24, 16, 14, 61) für den Transport der Seiten von dem Eingabefach zu der Bearbeitungsstation in einer vorherbestimmten Sequenz, zusätzlichen Fachmitteln (27, 28, 58), Ablieferungsmittel (14, 16, 36, 37, 66) für die Zuführung der Seiten zu den zusätzlichen Fachmitteln von der Bearbeitungsstation, Abziehmittel (32, 33, 59) für die Zuführung der Seiten von den zusätzlichen Fachmitteln für die Ablieferung an der Bearbeitungsstation in derselben Sequenz wie besagte vorherbestimmte Sequenz, und mit Steuermitteln (100, 105) für die Steuerung der Betriebsweise besagter Abziehmittel und besagter Ablieferungsmitteln, um die in besagten zusätzlichen Fachmitteln eingelaufenen Seiten von besagtem Eingabefach über besagte Bearbeitungsstation wiederholt umlaufen zu lassen, und zwar von den zusätzlichen Fachmitteln zu der Bearbeitungsstation und zurück zu den zusätzlichen Fachmitteln, dadurch gekennzeichnet, daß zur Eingabe eines Stapels von Dokumenten simultan in besagtes Eingabefach zu jeder beliebigen Zeit, unter Aufrechterhaltung der seitenweisen Durchführung jedes Dokuments durch die Bearbeitungsstation mit unterschiedlicher Häufigkeit, die zusätzlichen Fachmittel Dokumentenausgabemittel (38, 68, 69) aufweisen, so daß ein Dokument von dem weiteren Umlauf in der Blattzuführungsvorrichtung herausgenommen werden kann beim zusätzlichen Fachmittel, besagte Transportmittel so betrieben werden, daß die Seiten des nächsten Dokuments von dem Eingabefach zu der Bearbeitungsstation transportiert werden, unter der Voraussetzung fehlerfreien Betriebs, wenn die Seiten des gerade in Arbeit befindlichen Dokuments durch die Bearbeitungsstation in der gewünschten Häufigkeit hindurchgelaufen sind und an den zusätzlichen Fachmitteln entnommen worden sind.

2. Blattzuführungsvorrichtung gemäß Anspruch 1, dadurch gekennzeichnet, daß die zusätzlichen Fachmittel mit Abziehmitteln versehen sind, die selektiv betreibbar sind, in Abhängigkeit eines vorherbestimmten Zustandes, welcher der zuletzt durch besagte Ablieferungsmittel in den zusätzlichen Fachmitteln abgelieferten Seite zugeordnet ist, um diese Seite davon abzuziehen für die Wiederablieferung in der Bearbeitungsstation, wobei besagte Seite nach einer solchen Wiederablieferung durch besagte Ablieferungsmittel zu ihrem früheren Platz in den zusätzlichen Fachmitteln zurückgebracht wird.

3. Blattzuführungsvorrichtung gemäß Anspruch 2, mit mindestens einem ersten zusätzlichen Fach, das besagte zusätzliche Fachmittel bildet, dadurch gekennzeichnet, dâ das besagte Transportmittel selektiv anpaßbar ist, um als eine Abziehvorrichtung besagter Abziehmittel für besagte Seite, die zuletzt zu besagtem ersten zusätzlichen Fach abgeliefert worden ist, zu dienen.

4. Blattzuführungsvorrichtung gemäß Anspruch 3, dadurch gekennzeichnet, daß besagte zusätzliche Fachmittel ein zweites zusätzliches Fach aufweisen und daß besagte Abziehmittel erste und zweite Abziehvorrichtungen enthalten, die mit besagtem ersten und zweiten zusätzlichen Fach verbunden sind, wobei besagte erste Abziehvorrichtung selektiv anpaßbar ist, um als Abziehvorrichtung besagter Abziehmittel zu dienen für die zuletzt zu besagtem zweiten Zusatzfach abgelieferte Seite.

5. Blattzuführungsvorrichtung gemäß Anspruch 4, dadurch gekennzeichnet, daß die Ablieferungsmittel dann betätigbar sind, bevor besagter selektive Betrieb der besagten Abziehmittel stattfindet, wenn eine nachfolgende Seite die Bearbeitungsstation erreicht hat, und zwar nach der Seite mit der besagte vorherbestimmte Bedingung verbunden ist, um besagte nachfolgende Seite dann an der Bearbeitungsstation abzuliefern, und zwar zu dem einen der ersten und zweiten Zusatzfächer, welches die Seite mit dem besagten vorhergehenden Zustand nicht enthält, woraufhin die nachfolgende Seite durch die Abziehmittel zur Bearbeitungsstation zurückgeführt wird, und zwar nach der Seite mit der besagter vorherbestimmter Zustand verbunden ist.

6. Blattzuführungsvorrichtung gemäß Anspruch 3, dadurch gekennzeichnet, daß besagte Ablieferungsmittel dan betätigt werden, nachdem besagter selektiver Betrieb der besagten Abziehmittel begonnen hat, wenn eine nachfolgende Seite die Bearbeitungsstation nach derjenigen Seite erreicht hat, mit der besagter vorherbestimmter Zustand verbunden ist, um die besagte nachfolgende Seite dann an der Bearbeitungsstation absuliefern und zu dem zusätzlichen Fach zu bringen, von dem besagte nachfolgende Seite durch besagte Abziehmittel zurückgeführt wird zu der Bearbeitungsstation nach der besagten Seite, mit der besagter vorherbestimmter Zustand verbunden ist.

7. Blattzuführungsvorrichtung gemäß einem der Ansprüche 3 bis 6, dadurch gekennzeichnet, daß besagte Transportmittel verschwenkbar sind, um besagte selektive Anpaßbarkeit zu ermöglichen.

8. Blattzuführungsvorrichtung gemäß Anspruch 4 oder 5 oder gemäß Anspruch 7 in Abhängigkeit von Anspruch 4 oder 5, dadurch gekennzeichnet, daß besagte erste Abziehvorrichtung verschwenkbar ist, um ihre besagte selektive Anpaßbarkeit zu ermöglichen.

9. Blattzuführungsvorrichtung gemäß einem der vorhergehenden Ansprüche, dadurch gekennzeichnet, daß ein Sensor für das Lesen von den Auftrag definierenden Indizien vorgesehen ist, die auf einer Seite vorhanden sind, die von dem Eingabefach durch besagte Transportmittel transportiert wird, für die Steuerung der Blattzuführungsvorrichtung.

10. Blattzuführungsvorrichtung gemäß einem der vorhergehenden Ansprüche, dadurch gekennzeichnet, daß besagte Dokumentausgabemittel eine oder mehrere betätigbare Klappen enthält, die dann betätigt werden, um die Seiten eines Documents aus den zusätzlichen Fachmitteln zu entladen, wenn solche Seiten durch die Bearbeitungsstation oft genug hindurchgeführt worden sind, unter der Annahme fehlerfreien Betriebs, und bevor die erste Seite eines nächsten Dokumentes im Eingabefach die zusätzlichen Fachmittel erreicht hat.

11. Kopier- oder Vervielfältigungsgerät mit einer Blattzuführungsvorrichtung gemäß einem der Ansprüche 2 bis 8, bei der das Kopiergerät eine Vorrichtung zur Feststellung von Papierstaus bei sich, in einem Sortierer oder einem anderen Kopien handhabenden Teil, der damit verbunden ist, enthält, dadurch gekennzeichnet, daß ein solcher Papierstau, bei dem eine oder mehrere Kopien einer Seite beteiligt sind, der besagte vorherbestimmte Zustand, der mit dieser Seite verbunden ist, darstellt.

## Revendications

1. Dispositif d'alimentation de feuilles à circulation répétée pour l'alimentation répétée des pages d'un document selon une séquence prédéterminée à une station de traitement (15, 55), comportant un bac d'alimentation (20, 56) desdites feuilles, des moyens de transport (24, 16, 14, 61) des feuilles du bac d'alimentation à la station de traitement selon une séquence prédéterminée, des bacs supplémentaires (27, 28, 58), des moyens de délivrance (14, 16, 36, 37, 66) de pages aux bacs supplémentaires depuis la station de traitement, des moyens d'extraction (32, 33, 59) de pages des bacs supplémentaires pour les délivrer à la station de traitement selon le même séquence que ladite séquence prédéterminée, et des moyens de commande (100, 105) du fonctionnement desdits moyens d'extraction et desdits moyens de délivrance pour provoquer la circulation répétée depuis lesdits bacs supplémentaires, des pages reçues dans ces derniers depuis ledit bac d'alimentation, par ladite station de traitement, jusqu'à la station de traitement et leur retour dans lesdits bacs supplémentaires, caractérisé en ce que pour permettre le chargement d'une pile de documents en une seule fois à n'importe quel moment dans ledit bac d'alimentation tout en assurant toujours l'alimentation répétée de chaque document page par page à la station de traitement, lesdits bacs supplémentaires comportent des moyens de retrait de documents (38, 68, 69) de façon qu'un document puisse être retiré de la circulation dans le dispositif d'alimentation de feuilles à circulation répétée, aux bacs supplémentaires, lesdits moyens de transport étant actionnés pour transporter les pages du document suivant du bac d'alimentation à la station de traitement, en supposant un fonctionnement exempt d'erreur, lorsque les pages du document présent ont été passées à la station de traitement le nombre approprié de fois et ont été retirées des bacs supplémentaires.

2. Dispositif selon la revendication 1 caractérisé en ce que lesdits bacs supplémentaires comportent des moyens de retrait fonctionnant sélectivement en réponse à une condition prédéterminée associée à la page la plus récemment délivrée par lesdits moyens de délivrance auxdits bacs supplémentaires afin de retirer cette page de ces derniers pour la ré-entraîner à la station de traitement, ladite page après un tel ré-entraînement étant renvoyée à la place qu'elle occupait précédemment dans lesdits bacs supplémentaires par lesdits moyens de délivrance.

3. Dispositif selon la revendication 2 comportant au moins un premier bac supplémentaire, caractérisé en ce que ledit moyen d'entraînement peut être réglé sélectivement afin d'être utilisé comme dispositif de retrait dudit moyen de retrait pour ladite page la plus récemment délivrée dans ledit premier bac supplémentaire.

4. Dispositif selon la revendication 3 caractérisé en ce quil comporte un deuxième bac supplémentaire et en ce que ledit moyen d'extraction comprend des premier et deuxième dispositifs d'extraction respectivement, associés auxdits premier et deuxiéme bacs supplémentaires, ledit premier dispositif d'extraction pouvant être réglé sélectivement pour être utilisé comme un dispositif de retrait dudit moyen de retrait pour ladite page la plus récemment délivrée dans ledit deuxième bac supplémentaire.

5. Dispositif selon la revendication 4 caractérisé en ce que ledit moyen de délivrance peut être actionné avant ledit fonctionnement sélectif dudit moyen de retrait, si une page suivante a atteint la station de traitement à la suite de la page à laquelle ladite condition prédéterminée est associée, afin de délivrer ladite page suivante se trouvant alors à la station de traitement à l'un des premier et deuxième bacs supplémentaires ne contenant pas la page à laquelle est associée ladite condition prédéterminée, d'où ladite page suivante est renvoyée par ledit moyen de retrait à la station de traitement à la suite de ladite page à laquelle est associée ladite condition prédeterminée.

6. Dispositif selon la revendication 3 caractérisé en ce que ledit moyen de délivrance peut être actionné, après le commencement dudit fonctionnement sélectif dudit moyen de retrait, si une page suivante a atteint la station de traitement à la suite de la page à laquelle ladite condition prédéterminée est associée afin de délivrer ladite page suivante se trouvant alors à la station de traitement audit bac supplémentaire, d'où ladite page suivante est renvoyée par ledit moyen de retrait à la station de traitement à la suite de ladite page à làquelle est associée ladite condition prédéterminée.

7. Dispositif selon l'une quelconque des revendications 3 à 6 caractérisé en ce que ledit moyen d'entraîntement peut pivoter pour permettre son réglage sélectif.

8. Dispositif selon la revendication 4 au 5 ou selon la revendication 7 lorsque celle-ci dépend de la revendication 4 ou 5, caractérisé en ce que ledit premier dispositif d'extraction peut pivoter pour permettre son réglage sélectif.

9. Dispositif selon l'une quelconque des revendications précédentes caractérisé en ce qu'un détecteur est prévu pour la lecture d'indications de définition de travail portées par une page lorsque celle-ci est transportée à partir d'un bac d'alimentation par ledit moyen de transport, afin de commander le dispositif de ré-alimentation de feuilles.

10. Dispositif selon l'une quelconque des revendications précédentes caractérisé en ce que ledit moyen de déchargement de documents comprend une ou plusieurs portes pouvant être actionnées et commandées pour décharger les pages d'un document des bacs supplémentaires lorsque ces pages one été passées à la station de traitement ledit nombre approprié de fois, en supposant un fonctionnement exempt d'erreurs, et avant que la première page d'un document suivant dans le bac d'alimentation n'atteigne les bacs supplémentaires.

11. Machine de reproduction ou de duplication comportant un dispositif d'alimentation de feuilles à circulation répétée selon l'une quelconque des revendications 2 à 8, la machine de reproduction comportant des moyens pour détecter un bourrage de feuilles dans son mécanisme ou dans un dispositif de classement ou dans tout autre dispositif de manipulation de feuilles associé, caractérisée en ce qu'un tel bourrage de feuilles, impliquant une ou plusieurs copies d'une page, constitue une dite condition prédéterminée associée à cette page.

# FIG. 1

FIG. 2

FIG. 3

FIG. 4

FIG. 5

FIG. 6

FIG. 7A

0 002 913

# FIG.7B

```
                        ┌─────YES
              ◇ COLLATOR ◇────NO──┐        ┌──────────────┐
                REQUIRES          │        │ MACHINE STOPS│
                EMPTYING          │        └──────┬───────┘
                    │             │               │
                   YES      ┌──────────┐   ┌──────────────┐
                    │       │  COPIES  │   │COLLATOR EMPTIED│
              ◇ COPIES ◇──NO─│   MADE   │   └──────┬───────┘
                REQUESTED    └────┬─────┘          │
                    │             │        ┌──────────┐
                    │             │        │ RESTART  │◄──┘
                    │        ┌──────────┐  └──────────┘
                    │        │DRIVE 14a CCW│  ┌──────────┐
                    │        └────┬────────┘  │DRIVE 16a │
                    │             │           │OPERATES  │
                    │        ┌──────────┐     │REVERSE   │
                    │        │DEFLECTOR │     └──────────┘
                    │        │SOLENOID 18a│
                    │        │OPERATES  │       ╭──────────╮
                    │        └────┬─────┘       │ SOLENOID │
                    │        ┌──────────┐       │ 18a DROPS│
                    │        │PAGE DROPS│───────╯          ╰
                    │        │IN BIN 27 │       ┌─────────┐
                    │        └────┬─────┘       │DOOR     │
                    │             │             │SOLENOID │
                    │        ◇ HEADER ◇──YES────│38a      │
                    │          CARD             │OPERATES │
                    │             │             └────┬────┘
                    │            NO          ┌──────────────┐  ┌─────────┐
                    │             │          │HEADER CARD   │  │SOLENOID │
                    │             │          │DROPS TO BIN40│──│38a      │
                    │   ┌──────────┐         └──────────────┘  │DROPS    │
                (F)──│COUNTER   │◄────────────────────────────└─────────┘
                     │COUNTS    │
                     │PAGES IN  │
                     │BIN 27    │
                     └──────────┘   (B)──┌──────────────┐
                                         │ MACHINE STOPS│
                                         └──────┬───────┘
                     ┌──────────┐   ┌──────────────┐
                     │ RESTART  │───│COLLATOR EMPTIED│
                     └────┬─────┘   └──────────────┘
                (E)───────┤
                    ┌─────┴──────┐
          ┌──────┐ ┌──────────┐ ┌──────────┐
          │DRIVE │ │DRIVE 16a │ │SOLENOIDS │
          │14a   │ │OPERATES  │ │19b AND   │
          │CW    │ │FORWARD   │ │83        │
          └──────┘ └──────────┘ │OPERATE   │
                                └────┬─────┘
                                ┌──────────┐
                                │DRIVES    │
                                │32a & 94  │
                                │OPERATE   │
                                │(32a CCW) │
                                └────┬─────┘
                                ┌──────────┐    ╭──────────╮
                                │PAGE      │    │SOLENOIDS │
                                │PASSES    │────│19b & 83  │
                                │SWITCH    │    │DROP      │
                                │43a       │    ╰──────────╯
                                └────┬─────┘    ╭──────────╮
                                     │          │DRIVES    │
                                     │──────────│32a & 94  │
                                     │          │STOP      │
                                     │          ╰──────────╯
```

( FIG. 7 B )

**FIG. 7C**

```
┌─────────────┐
│ REQUIRED    │
│ COPIES MADE │
└─────────────┘
```

```
┌─────────────┐   ┌─────────────┐   ┌─────────────┐
│ DEFLECTOR   │   │ DRIVE 14a   │   │ DRIVE 16a   │
│ SOLENOID    │   │ CCW         │   │ REVERSE     │
│ 18b         │   └─────────────┘   └─────────────┘
│ OPERATES    │
└─────────────┘
```

```
┌─────────────┐
│ PAGE        │
│ DROPS IN    │
│ BIN 28      │
└─────────────┘
```

```
┌─────────────┐
│ COUNTER     │
│ COUNTS      │
│ PAGES TO    │
│ BIN 28      │
└─────────────┘
```

( E ) ◄── NO ── ◇ ALL PAGES FROM BIN 27 ◇

( G ) ── YES

```
┌─────────────┐   ┌─────────────┐
│ SOLENOIDS   │   │ DRIVE 16a   │
│ 19c & 83a   │   │ OPERATES    │
│ OPERATE     │   │ FORWARD     │
└─────────────┘   └─────────────┘
```

```
┌─────────────┐
│ DRIVES      │
│ 33a & 94a   │
│ OPERATE     │
│ (33a CCW)   │
└─────────────┘
```

```
┌─────────────┐      ╭─────────────╮
│ PAGE        │      │ SOLENOIDS   │
│ PASSES      │      │ 19c & 83a   │
│ SWITCH      │      │ DROP        │
│ 43b         │      ╰─────────────╯
└─────────────┘
```

( FIG. 7D )

( D )

```
╭─────────────╮
│ DRIVES      │
│ 33a & 94a   │
│ STOP        │
╰─────────────╯
```

FIG. 7D

(FIG 7C)

FIG. 8A

**FIG. 8A** **0 002 913**

```
┌─────────────┐
│ SOLENOIDS   │
│ 82 & 33b    │
│ OPERATE     │
└──────┬──────┘
       │
┌──────▼──────┐
│ DRIVES      │
│ 33a & 94    │
│ OPERATE     │
│ ( 33a CW)   │
└──────┬──────┘
       │
┌──────▼──────┐
│ PAGE        │
│ PASSES      │          ╭──────────────────────╮
│ SWITCH 43a  ├─────────▶│ SOLENOIDS 82 & 33b   │
└──────┬──────┘          │ AND DRIVES 33a &     │
       │                 │ 94 DROP              │
┌──────▼──────┐          ╰──────────────────────╯
│ PAGE        │
│ ON GLASS    │
│ & LOST COPIES│
│ REMADE      │
└──────┬──────┘
       │
┌──────▼──────┐
│ DRIVE 14a   │
│ -CCW        │               FIG. 8B
│ DRIVE 16a   │
│ -REVERSE    │
│ SOLENOID 18a│
│ OPERATES    │
└──────┬──────┘
       │
┌──────▼──────┐
│ PAGE        │
│ BACK TO     │
│ BIN 27      │
└──────┬──────┘
       │                 ╭──────────────╮
       ├────────────────▶│ SOLENOID     │
       │                 │ 18a DROPS    │
┌──────▼──────┐          ╰──────────────╯
│ SOLENOIDS   │
│ 82a & 24b   │
│ OPERATE     │
└──────┬──────┘
       │
┌──────▼──────┐
│ DRIVES 24a &│
│ 94a OPERATE │
│ ( 24a CW)   │
│ DRIVES 16a  │
│ & 14a       │
│ -FORWARD    │
└──────┬──────┘
       │
┌──────▼──────┐
│ PAGE        │
│ PASSES      │          ╭──────────────────────╮
│ SWITCH 43a  ├─────────▶│ SOLENOIDS 82a & 24b  │
└──────┬──────┘          │ AND DRIVES 24a &     │
       │                 │ 94a DROP             │
    ╭──▼──╮              ╰──────────────────────╯
    │EXIT │
    ╰─────╯
```

11

REDUCTION:
.78 ☐
.66 ■
DARKEN COPY:
YES ☐
DUPLEX COPY:
YES ☐
COPY QUANTITY:
☐ ☐ . . . . . . . . ■
1  2 . . . . . . . . 9
☐ ■ . . . . . . . . ☐
10 20 . . . . . . . 90
■ ☐ . . . . . . . . ☐
100 . . . . . . . 900

110

**FIG. 9**

**FIG. 10**

105

25

110